# DEMANDE DE BREVET EUROPEEN

(11) **EP 3 771 024 A1**
(43) Date de publication de la demande: **27.01.2021**
(21) Numéro de dépôt: 20186757.9
(22) Date de dépôt: 20.07.2020
(51) Int. Cl.: H01M 50/116, H01M 50/124, H01M 50/502, H01M 10/04

(54) **PROCEDE D AMINCISSEMENT ET D ENCAPSULATION DE COMPOSANTS MICROELECTRONIQUES**

(30) Priorité: 23.07.2019 FR 1908320
(71) Demandeur: Commissariat à l'énergie atomique et aux énergies alternatives, 75015 Paris (FR)
(72) Inventeur: BEDJAOUI, Messaoud, 38054 GRENOBLE CEDEX 09 (FR)
(74) Mandataire: Brevalex

(57) **Abrégé**

Procédé d'amincissement et d'encapsulation d'un composant microélectronique comprenant les étapes suivantes :
- fourniture d'une structure élémentaire comprenant un substrat (200), ayant une épaisseur supérieure à 200µm, un composant microélectronique (300), et une couche adhésive (410) ; la couche adhésive étant recouverte par une couche de protection détachable (430),
- fixation de la couche de protection détachable (430) sur une structure de manipulation (100),
- protection de la face latérale du substrat,
- amincissement du substrat (200) jusqu'à une épaisseur inférieure à 100µm,
- séparation de la structure élémentaire de la structure de manipulation, par exemple, en séparant la couche de protection détachable (430) de la couche adhésive (410).

Le procédé peut comporter une étape ultérieure au cours de laquelle on fixe, sur la couche adhésive (410) de la structure élémentaire, un élément (700) comprenant une ou plusieurs autres structures élémentaires de manière à former un empilement vertical.

## Description

### DOMAINE TECHNIQUE

La présente invention se rapporte au domaine général de l'amincissement et de l'encapsulation de composants microélectroniques, comme des microbatteries au lithium.

L'invention concerne un procédé d'amincissement d'un substrat recouvert par des composants microélectroniques et d'encapsulation de ces composants microélectroniques.

L'invention concerne également un dispositif obtenu par ce procédé.

L'invention est particulièrement intéressante puisqu'elle permet d'augmenter la capacité volumique des composants microélectroniques et/ou de former des empilements verticaux. L'invention trouve des applications dans de nombreux domaines industriels, et notamment dans le domaine de l'énergie et pour la fabrication de systèmes des systèmes autonomes multifonctionnels.

### ÉTAT DE LA TECHNIQUE ANTÉRIEURE

Ces dernières années ont vu l'essor des objets connectés (ou loT pour « Internet of Things »). Ces objets nécessitent, parfois, des dispositifs de récupération et de stockage d'énergie qui doivent répondre à de nombreuses contraintes technologiques : des performances électriques accrues, un encombrement réduit et un dimensionnel très conformable.

Notamment, dans le cas où ces dispositifs sont des microbatteries, celles-ci doivent avoir de bonnes performances électrochimiques tout en présentant un encombrement minimal.

Pour optimiser les performances des microbatteries, il existe plusieurs éléments pouvant être modifiés : la forme et les dimensions (« design ») des couches actives, la nature des matériaux d'électrodes employés, les procédés de fabrication et les techniques d'emballage (« packaging »). D'une manière générale, la notion de packaging couvre toutes les étapes qui suivent les étapes standards de réalisation des microbatteries de façon groupée à l'échelle d'un substrat épais.

D'une manière générale, on cherche à avoir des microbatteries à forte capacité volumique. La capacité volumique correspond au rapport entre la capacité surfacique et le volume du composant. Pour cela, il est nécessaire de réduire l'encombrement des couches dites passives, notamment les couches d'encapsulation et les couches d'interconnexion, par rapport aux couches dites actives, comme les électrodes qui définissent la valeur de capacité surfacique.

L'une des solutions de l'état de l'art consiste à empiler plusieurs composants unitaires afin d'amplifier les performances électrochimiques et répondre favorablement à cette problématique. Par exemple, dans les documents US 2017/0111994 A1 et US 2009/0136839 A1, l'interconnexion électrique est réalisée en créant des vias traversant dans les coins et/ou sur les bords du substrat hôte et en les remplissant par des colles électriquement conductrices. L'inconvénient majeur de ces solutions réside dans la création de zones fragiles au niveau des coins et/ou des bords du substrat. Plus le substrat est fin, plus cette fragilisation est importante.

Une autre voie permettant d'optimiser la capacité volumique consiste à amincir les substrats rigides utilisés comme supports de fabrication des microbatteries.

Dans le cas particulier de substrats rigides en verre, l'opération d'amincissement est réalisée par des procédés d'immersion ou des procédés d'aspersion de la face arrière d'un substrat avec une solution de gravure, par exemple avec des solutions de gravure comprenant de l'acide fluorhydrique HF (49%), ou encore formée d'un mélange de HF et d'acide chlorhydrique HCl, ou d'un mélange HF, eau et acide nitrique.

Cependant, un des problèmes majeurs de l'amincissement chimique concerne la manipulation des substrats fin ou ultrafin pendant et après l'amincissement. En effet, les substrats initialement rigides deviennent très fragiles après l'étape d'amincissement et il est difficile de réaliser, par la suite, les étapes ultérieures de découpe et/ou d'intégration.

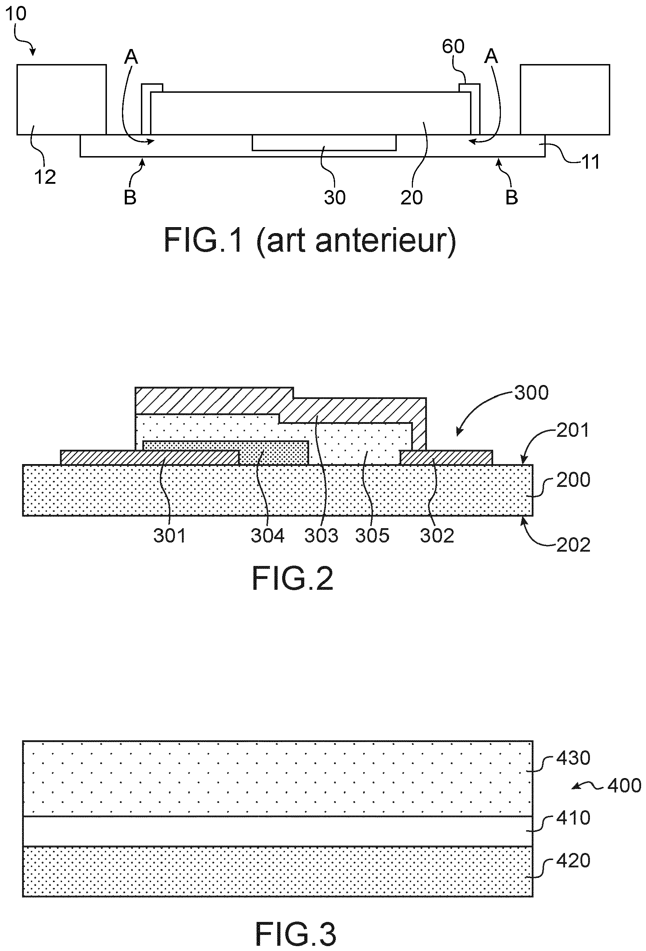

Afin de remédier à ces inconvénients, et comme décrit dans le document WO 2019/150020 A1, le substrat 20 à amincir et comportant le composant microélectronique 30 peut être monté sur un support d'amincissement 10 inerte aux solutions de gravure et comprenant : un cadre rigide 12 et un adhésif 11 mono-face, étiré, et formant une structure en forme de peau de tambour (figure 1). La face latérale du substrat 20 est protégée par une couche de protection latérale 60 lors de la gravure. L'adhésif peut être sensible aux UV ou thermosensible. Par exemple, l'adhésif peut présenter une très forte force de collage qui diminue, sous l'effet des UV, ce qui permet de retirer facilement le substrat 20 du support d'amincissement 10.

Néanmoins, pour des durées de gravure relativement longues, par exemple, dans le cas de l'utilisation de faibles concentrations de solution de gravure, les solutions de gravure peuvent s'infiltrer au niveau des zones périphériques A du substrat 20 ainsi qu'au niveau de la face arrière du support B, ce qui peut détériorer les microbatteries et donc leurs performances électrochimiques.

### EXPOSÉ DE L'INVENTION

Un but de la présente invention est de proposer un procédé permettant d'amincir un substrat recouvert par un composant microélectronique et d'encapsuler un composant microélectronique, remédiant aux inconvénients de l'art antérieur, le procédé devant être simple, facile à mettre en œuvre, et préservant l'intégrité des composants.

Pour cela, la présente invention propose un procédé d'amincissement et d'encapsulation d'un composant microélectronique, le procédé comprenant les étapes suivantes :
- fourniture d'un substrat comprenant une première face principale, une deuxième face principale et une face latérale, le substrat ayant une épaisseur supérieure à 200µm, et étant recouvert par un composant microélectronique et une couche adhésive, la couche adhésive étant recouverte par une couche de protection détachable ; le substrat, la couche adhésive et le composant formant une structure élémentaire,
- fixation de la couche de protection détachable sur une structure de manipulation comprenant un film adhésif et un cadre de support, le film adhésif comprenant une première face adhésive et une seconde face, opposée à la première face adhésive, la couche de protection détachable étant disposée en regard de la première face adhésive du film adhésif,

- dépôt d'une couche de protection latérale sur la face latérale du substrat et sur le pourtour de la seconde face du substrat, la couche de protection latérale étant en contact avec la première face adhésive du film adhésif, moyennant quoi le substrat est assemblé avec la structure de manipulation,
- amincissement de la seconde face principale du substrat jusqu'à une épaisseur inférieure à 100µm, et de préférence inférieure à 50µm,
- séparation de la structure élémentaire de la structure de manipulation.

Le procédé de l'invention se distingue fondamentalement de l'art antérieur par la présence d'une couche adhésive conduisant à une combinaison particulière d'étapes d'amincissement de substrats et d'encapsulation. La présence de la couche adhésive présente de nombreux avantages pour mettre en œuvre le procédé :
- elle protège très efficacement la première face du substrat et le composant microélectronique vis-à-vis des produits chimiques de gravure,
- elle forme une protection efficace par rapport aux vapeurs corrosives dégagées lors du procédé d'amincissement, préservant ainsi les composants microélectroniques, notamment les collecteurs de courant, souvent métalliques, et la couche anodique des microbatteries ; cette protection est améliorée par la présence de la couche de protection détachable,
- elle joue le rôle de couche d'encapsulation dans le dispositif final, en particulier vis-à-vis des oxydants des couches lithiées,
- elle facilite les étapes de libération et de manipulation des substrats amincis pour accomplir les opérations d'assemblage,
- de par sa nature adhésive, elle permet de reporter et de fixer facilement un autre élément sur la structure élémentaire afin de réaliser des empilements verticaux.

Avantageusement, le procédé comprend en outre les étapes suivantes :
- séparation de la couche de protection détachable de la couche adhésive,
- fixation d'un élément sur la couche adhésive de la structure élémentaire.

Selon une première variante de réalisation avantageuse, l'élément fixé sur la couche adhésive est un capot.

Selon une deuxième variante de réalisation avantageuse, l'élément fixé sur la couche adhésive comprend une ou plusieurs autres structures élémentaires, de manière à former un empilement vertical avec la première structure élémentaire, chaque structure élémentaire étant fixée, par l'intermédiaire de sa couche adhésive ou par l'intermédiaire de son substrat, à la couche adhésive de la structure élémentaire sous-jacente. Une structure élémentaire est fixée directement à la couche adhésive de la structure élémentaire sous-jacente. Par directement, on entend qu'il n'y a pas d'élément intermédiaire entre les deux structures élémentaires.

Cette architecture particulière de packaging permet d'obtenir un dispositif à forte capacité volumique.

Selon l'orientation des composants microélectroniques, il est possible de connecter les composants en parallèle ou en série.

Plusieurs structures élémentaires peuvent être facilement empilées pour former un assemblage vertical, grâce à la présence de la couche adhésive. Un tel assemblage comprenant, en particulier, des microbatteries présente une forte capacité volumique tout en réduisant le volume occupé.

Avantageusement, une ultime structure élémentaire est positionnée sur l'empilement vertical, la couche adhésive de l'ultime structure élémentaire étant fixée directement à la couche adhésive de la structure élémentaire sous-jacente. Cette configuration dite tête bêche est particulièrement avantageuse puisque le substrat de la dernière structure élémentaire de l'empilement joue le rôle de capot. Il n'y a pas besoin de rajouter d'autres éléments de protection, ce qui limite le volume des couches passives de l'empilement et augmente la capacité volumique.

Une fois l'assemblage réalisé, il est alors possible de former les interconnexions électriques dans le volume de l'assemblage. Comme l'assemblage est compact, la formation des contacts électriques ne le fragilise pas contrairement aux procédés de l'art antérieur. Les différentes structures élémentaires de l'empilement vertical peuvent être disposées en en parallèle et/ou en série.

Avantageusement, le procédé comporte en outre une étape au cours de laquelle des ouvertures sont réalisées à travers la couche adhésive de manière à rendre accessible le composant microélectronique, et une étape au cours de laquelle les ouvertures sont remplies par un matériau électriquement conducteur moyennant quoi on forme des contacts électriquement conducteurs, connectés aux composants microélectroniques.

Selon une variante de réalisation avantageuse, la couche adhésive est un film conducteur anisotrope (ou ACF pour « Anisotropic Conductive Film »).

Avantageusement, la couche adhésive présente un évidement de manière à former une cavité pour le composant microélectronique.

Alternativement, la couche adhésive peut être discontinue de manière à former, après la fixation de l'élément, une cavité pour le composant microélectronique.

Selon ces modes de réalisation avantageux, le volume libre ainsi formé autour du composant microélectronique permet, notamment dans le cas d'une microbatterie, de s'affranchir des variations de volume du composant lié à l'activité électrochimique entre les deux électrodes.

Avantageusement, le substrat comporte plusieurs composants microélectroniques, de préférence, des microbatteries.

Avantageusement, la couche adhésive a une épaisseur allant de 1 à 50µm, et de préférence de 15µm à 40µm, par exemple de 15µm à 30µm.

Avantageusement, la couche adhésive est laminée sur le substrat. Ceci permet de renforcer l'adhérence de la couche adhésive sur le substrat et son maintien mécanique.

Le procédé selon l'invention présente de nombreux avantages :
- une libération aisée du substrat aminci,
- obtenir une structure finale avec plusieurs structures élémentaires amincies chimiquement, solidarisées et électriquement connectées entre elles,
- la technique d'assemblage verticale conduit à l'obtention d'un dispositif final robuste,
- l'étape d'amincissement des substrats est simple à mettre en œuvre,
- le dispositif présente de bonnes performances électrochimiques,
- l'encapsulation complète des microbatteries est compatible avec les étapes d'intégration,
- la protection des dispositifs microélectroniques, et en particulier des couches lithiées des microbatteries, vis-à-vis de l'air et de l'humidité,
- il n'y a pas de résidus de colle provenant du ruban adhésif, fixés aux composants microélectroniques, puisque, dans ce procédé, la couche adhésive fait partie de l'assemblage final, ce qui évite de réaliser des étapes supplémentaires de rinçage pouvant altérer l'intégrité des microbatteries à cause de la très forte réactivité de l'eau avec les composants lithiés.

L'invention concerne également un dispositif comprenant un empilement vertical comprenant au moins une première structure élémentaire et une deuxième structure élémentaire, chaque structure élémentaire comprenant un substrat, ayant une épaisseur inférieure à 100µm et de préférence inférieure à 50µm, une première face principale du substrat étant recouverte successivement par un composant microélectronique, de préférence une microbatterie, et par une couche adhésive, la deuxième structure élémentaire étant fixée, par exemple par l'intermédiaire de sa couche adhésive ou de son substrat, à la couche adhésive de la première structure élémentaire.

Avantageusement, l'empilement vertical comprend une structure élémentaire additionnelle, la couche adhésive de la structure élémentaire additionnelle étant positionnée en regard de, et fixée à, la couche adhésive de la structure élémentaire sous-jacente.

Le dispositif obtenu présente une forte capacité volumique, une bonne tenue mécanique et une bonne résistance chimique vis-à-vis des éléments tels que l'humidité et l'air.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
Fig. 1 précédemment décrite, représente, de manière schématique, une microbatterie lors d'une étape de gravure chimique selon un procédé de l'art antérieur,
Fig. 2 représente, de manière schématique et en coupe, une microbatterie, selon un mode de réalisation particulier de l'invention,
Fig. 3 représente, de manière schématique et en coupe, une couche adhésive, selon un mode de réalisation particulier de l'invention,
Fig. 4A et 4B représentent de manière schématique et en coupe, une microbatterie sur un substrat recouvert par une couche adhésive, selon différents modes de réalisation particuliers de l'invention,
Fig. 5A, 5B, 6 et 7 représentent de manière schématique et en coupe, différentes étapes d'un procédé d'amincissement et d'encapsulation d'une microbatterie, selon un mode de réalisation particulier de l'invention,
Fig. 8A, 8B, 8C, 8D et 8E représentent de manière schématique et en coupe, différentes étapes d'un procédé d'assemblage vertical de plusieurs microbatteries, selon un mode de réalisation particulier de l'invention,
Fig.9 représente, de manière schématique et en coupe, un assemblage vertical de plusieurs microbatteries connectées en parallèle, selon un autre mode de réalisation particulier de l'invention,
Fig.10 est un cliché photographique d'un substrat de type « wafer », recouvert par plusieurs microbatteries, et sur lequel a été reportée par laminage une couche adhésive double face et son film de protection externe, selon un mode de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », «dessous », etc. d'une structure s'appliquent en considérant que la structure est orientée de la façon illustrée sur les figures.

### EXPOSÉ DÉTAILLÉ DE MODES DE RÉALISATION PARTICULIERS

Par la suite, même si la description fait référence à des microbatteries, et plus particulièrement à des microbatteries au lithium, ainsi qu'à des substrats en verre, notamment sous un format de tranche (« wafer »), l'invention est transposable à d'autres dispositifs microélectroniques, et notamment à tout autre dispositif électrochimique, et à d'autres natures, épaisseurs et/ou formes de substrats. Alternativement, le substrat pourrait être, par exemple, en silicium.

Le procédé de fabrication d'amincissement, d'encapsulation et d'assemblage vertical de microbatteries comprend les étapes suivantes :
- fabrication des microbatteries 300, sur un substrat 200,
- report d'une couche adhésive 410, sur le substrat 200,
- fixation de la couche adhésive 410 sur une structure de manipulation 100,
- amincissement du substrat 200 des microbatteries 300,
- séparation des microbatteries 300 de la structure de manipulation 100,
- assemblage vertical des microbatteries 300,
- interconnexion électrique des microbatteries 300.

### Etape 1 : Fabrication des microbatteries 300 :

Dans un premier temps, nous allons décrire le procédé de fabrication d'une microbatterie 300 sur un substrat 200. C'est la première étape nécessaire à la préparation de la structure élémentaire (aussi appelée structure de base ou structure unitaire, et notée S).

### Substrat 200 :

Le substrat 200 (aussi appelé substrat hôte ou substrat support) est de préférence un substrat rigide.

Par substrat rigide, nous entendons tout support aisément utilisable en microélectronique avec une épaisseur supérieure à 200µm. Par exemple, le substrat rigide a une épaisseur supérieure à 200µm, par exemple de 500µm à 1mm. Il a, par exemple, une épaisseur de 500µm.

Comme représenté sur la figure 2, le substrat 200 comporte une première face principale 201, dite face active (ou face avant), opposée à une seconde face principale 202 (dite face arrière). Le substrat 200 comprend également une face latérale allant de la première face principale 201 à la seconde face principale.

Le substrat 200 peut avoir différentes formes géométriques. Il est possible par exemple d'utiliser des formats circulaires type wafers ou des formats feuilles, c'est-à-dire rectangulaires.

Le substrat 200 a, avantageusement, les performances requises pour l'encapsulation des microbatteries au lithium. Il est élaboré en un matériau ayant des niveaux de barrière WVTR (« Water Vapour Transmission Rate ») et OTR (« Dioxygen Transfert Rate ») au plus, respectivement, de 10⁻⁴ g/m²/j et de
10⁻⁴ cm³/m²/j pour garantir des propriétés d'étanchéité suffisantes vis-à-vis de l'air et de la vapeur d'eau.

Le substrat 200 peut être en un matériau choisi parmi les verres, le silicium (monocristallin ou polycristallin), les céramiques, le mica, et le quartz.

De préférence, il est en verre. De tels substrats sont compatibles avec les procédés d'amincissement par rectification mécanique (« grinding »), malgré la présence d'une forte topographie induite par l'empilement des couches actives des microbatteries.

Les verres peuvent être des borosilicates (comme les D263®LA, D263®M, D263®T, MEMpax® ou encore le Borofloat® commercialisés par la société SCHOTT®), des dérivés de borosilicates comme les verres alkali-free borosilicates (AF32®, AF45, Corning®Willow....) ou encore des verres de type boro-aluminosilicates (« alkaline earth boro-aluminosilcates ») commercialisés par exemple par les sociétés Corning Lotus™, EAGLE XG®®. De tels substrats sont parfaitement adaptés aux procédés de fabrication des microbatteries au lithium.

De préférence, le substrat 200 est transparent aux longueurs d'onde des lasers classiquement utilisés pour les étapes de découpe. Par transparent, on entend que le substrat 200 laisse passer au moins 50% de la lumière émise par le laser.

### Dispositif microélectronique 300 :

Au moins un dispositif microélectronique 300 est disposé sur la première face principale 201 du substrat 200.

Le dispositif microélectronique a une épaisseur allant de 5µm à 30µm, et de préférence de 10 à 15µm.

La première face 201 du substrat 200 peut comporter plusieurs dispositifs microélectroniques 300 afin, par exemple, de multiplier les performances électrochimiques par une mise en parallèle ou en série des dispositifs microélectroniques. La réalisation de plusieurs dispositifs sur le même substrat permet, avantageusement, de réduire les couts de fabrication des microbatteries. Les dispositifs microélectroniques 300 peuvent être identiques ou différents.

Par dispositif microélectronique, on entend un composant microélectronique 300, comme par exemple, un MEMS (microsystème électromécanique), un MOEMS (microsystème opto-électro-mécanique), un micro-détecteur infrarouge, un transistor, une microbatterie, une capacité, une supra-capacité, un composant photovoltaïque, une antenne ou tout autre dispositif jugé nécessaire pour la réalisation d'objets connectés.

Le dispositif microélectronique 300 peut être sensible à l'air (au dioxygène et à la vapeur d'eau). Il peut s'agir, par exemple d'un empilement capacitif ou d'un composant électrochrome.

Comme représenté sur la figure 2, le dispositif microélectronique 300 peut être une microbatterie. Elle comprend des collecteurs de courant cathodique 301 et anodique 302, disposés sur le substrat 200. Deux couches actives, l'une formant l'électrode négative 303, et l'autre formant l'électrode positive 304, sont séparées par une couche d'électrolyte 305. Chaque couche active 303, 304 est en contact avec l'un des collecteurs de courant 301, 302.

Les collecteurs de courant 301 et 302 sont, avantageusement, métalliques. A titre illustratif, ils peuvent être en titane, or, aluminium, platine, ou en tungstène. Ils ont, par exemple, une épaisseur de 300nm.

L'électrode positive 304 (cathode) est en un matériau ayant une bonne conductivité électronique et ionique (par exemple TiOS, TiS₂, LiTiOS, LiTiS₂, LiCoO₂, V₂O₅...). On choisira de préférence une électrode positive en oxyde de cobalt. Ce type de cathode est considéré comme l'une des couches les plus performantes pour les microbatteries et en même temps les plus contraintes lors des étapes de réalisation. En effet, les contraintes mécaniques engendrées après formation de la couche cathodique (Coefficient d'expansion thermique entre 10x10⁻⁶/°C et 15x10⁻⁶/°C et un module de Young entre 100 et 500 GPa) peuvent influer sur le comportement des substrats rigides une fois amincis.

L'électrolyte 305 est un isolant électronique avec une forte conductivité ionique (par exemple LiPON, LiPONB, LiSiCON...).

L'électrode négative 303 (anode) est une couche qui peut être du lithium métallique ou un matériau lithié.

Optionnellement et selon les configurations, les couches actives peuvent être protégées par un système d'encapsulation primaire composé d'une ou de plusieurs couches barrières élémentaires dont le rôle principal est de garantir une intégrité des dispositifs microbatteries pendant les différentes phases du procédé.

La microbatterie sera réalisée par les techniques connues de l'homme du métier, par exemple réalisées par des techniques de dépôt en couches minces tout-solides.

### Etape 2 : Report de la couche adhésive 410 :

Dans cette deuxième étape, on reporte une couche adhésive 410 sur l'ensemble des microbatteries 300 unitaires et le substrat hôte 200.

Comme représenté sur la figure 3, la couche adhésive 410 utilisée est, par exemple, initialement recouverte, de part et d'autre, par une couche de protection dite interne 420 (aussi appelée couche inférieure) et une couche de protection dite externe 430 (aussi appelée couche supérieure). Il s'agit d'un adhésif 400 dit double face.

Les couches de protection 420, 430, aussi « appelées liners », sont employées comme éléments de consolidation mécanique lors des opérations de manipulation de la couche adhésive 410. Elles sont facilement retirables. Il peut s'agir, par exemple, de films en PET d'une épaisseur de quelques dizaines de microns à quelques centaines de micromètres.

Les deux faces principales de la couche adhésive 410, en contact avec les couches de protection 420, 430, sont de nature adhésive.

La couche adhésive 410 peut être sensible à la pression (« Pressure Sensitive Adhesive »). Elle est, par exemple, à base d'acrylique, de silicone, de caoutchouc ou d'un mélange de ces matières.

La couche adhésive 410 sera, avantageusement, la plus fine possible pour réduire l'épaisseur des couches passives de la structure de base et optimiser *in fine* le volume de l'assemblage des microbatteries.

La couche adhésive 410 a, par exemple, une épaisseur totale entre 1µm et 50µm et préférentiellement de l'ordre de 25µm.

Les films de protection 420 et 430 ont une épaisseur allant de 20µm à 200µm. Par exemple, le film de protection interne 420 a une épaisseur entre 20µm et 50µm, et préférentiellement de l'ordre 50µm. Par exemple, le film de protection externe 430 a une épaisseur entre 50µm et 200µm et préférentiellement de l'ordre 150µm. Les épaisseurs des films de protection 420, 430 pourraient être inversées.

A titre d'exemple illustratif, il est possible d'utiliser les références commercialisées par Tesa® comme Tesa®61500 ou Tesa®64621, ou encore par 3M™ : 82600 ; 82601, 82603 ou 82605.

Selon l'une des variantes, la couche adhésive 410 est un film ACF (« Adhesive Conductive Film ») dont la propriété de conduction électrique se fait de façon verticale. Avantageusement, avec un film ACF, il n'est pas nécessaire de procéder à l'étape d'interconnexion électrique (i.e. à la création des ouvertures au remplissage des ouvertures pour former des plots électriques 810).

Il est possible de réaliser une étape de laminage pour assembler efficacement la couche adhésive 410 avec le substrat 200 et la microbatterie unitaire 300. L'un des films de protection 420, 430 est retiré préalablement à cette étape de laminage. D'une manière générale, le laminage peut se faire sous vide ou bien sous atmosphère contrôlée. L'assemblage peut être réalisé sous vide à une température allant de 50°C à 150°C, par exemple de 50°C à 120°C, par exemple de l'ordre de 90°C, avec une pression supérieure à 1 bar et une vitesse inférieure à 3 m/mn. Selon une variante de réalisation, il est possible d'utiliser des adhésifs réticulés par insolation UV ou bien se fixant avec une simple pression pour éviter de mettre en œuvre une étape de chauffage.

Selon une autre variante de réalisation, la couche adhésive 410 est reportée par scellement sur la face avant du substrat.

Cette étape de report permet de garantir une protection mécanique et chimique des microbatteries 300 lors des opérations de rectification de la face arrière du substrat.

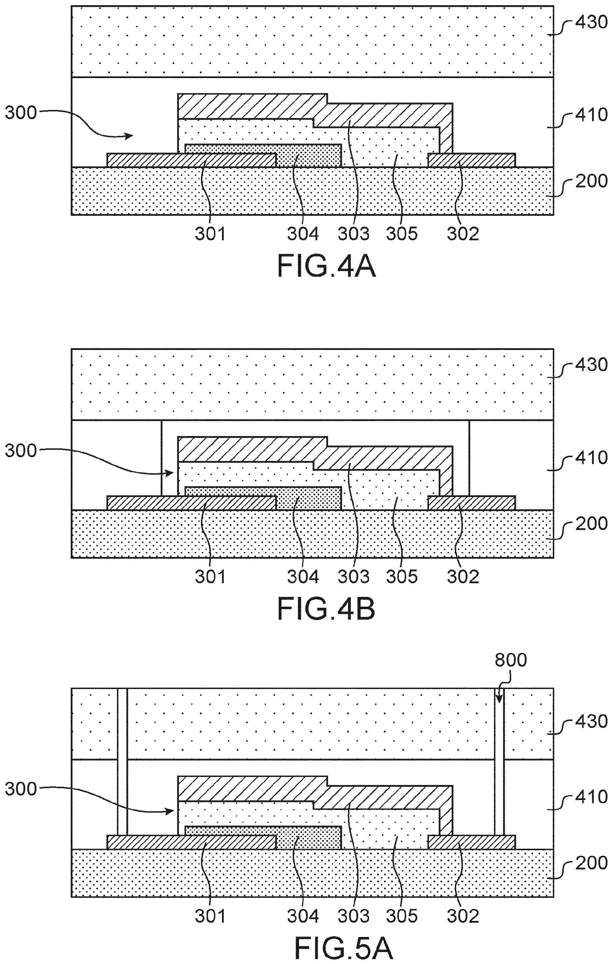

A l'issue de cette étape, le dispositif électrochimique 300 et le substrat 200 sont recouverts par la couche adhésive 410 et la couche de protection externe 430 (figure 4A).

Selon une variante de réalisation, la couche adhésive 410 est discontinue afin de créer des cavités 450 en vis-à-vis des microbatteries (figure 4B).

Selon une autre variante de réalisation non représentée, la couche adhésive 410 est évidée pour créer une cavité au-dessus la microbatterie 300.

La présence d'un volume libre, obtenu par une couche adhésive 410 discontinue ou par évidement de la couche adhésive 410, permet de s'affranchir des variations de la microbatterie unitaire 300 liées à l'activité électrochimique entre les deux électrodes.

Chaque structure de base élémentaire comporte trois éléments : un substrat 200 dont la face arrière 202 peut être amincie, une microbatterie 300 ou un ensemble de microbatteries 300 disposées sur la face avant 201 du substrat 200 et une couche adhésive 410 double face couvrant à la fois les microbatteries 300 et la face avant du substrat 200.

Suite au report de la couche adhésive 410, l'accès aux contacts électriques 301 et 302 de la microbatterie 300 est rendu possible par la création de deux ouvertures ou passages 800 à travers la couche adhésive 410 et la couche de protection externe 430 (figure 5A).

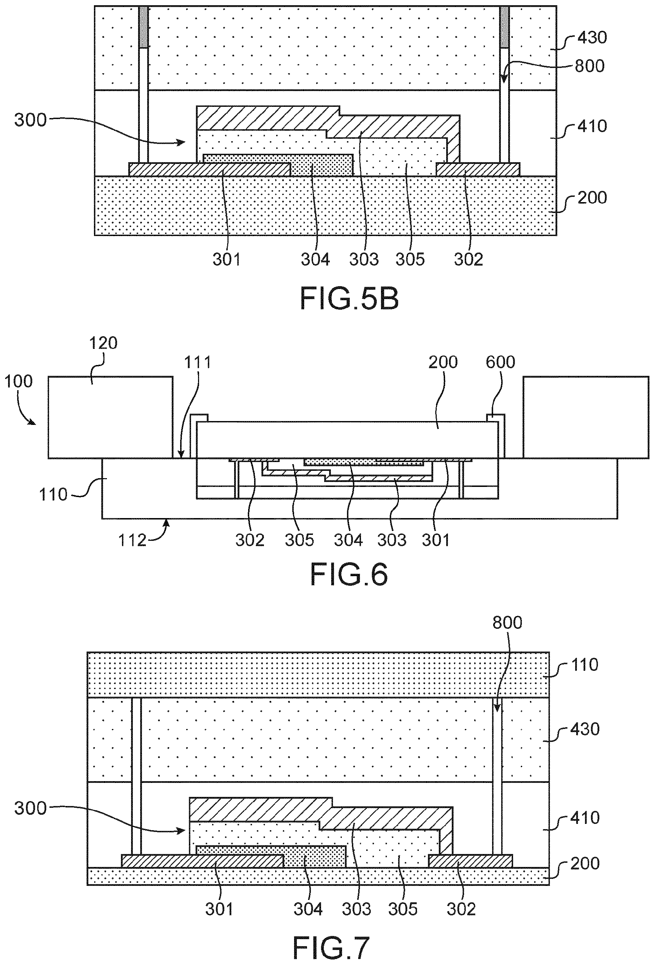

Alternativement, les ouvertures 800 peuvent être réalisées dans la couche adhésive 410 préalablement au report de la couche adhésive 410 sur le substrat 200. Selon une première alternative, les ouvertures 800 forment des trous borgnes dans la couche adhésive 410 (i.e. elles ne traversent pas complètement la couche adhésive 410). Selon une autre alternative, les ouvertures 800 forment des trous débouchant dans la couche adhésive (i.e. elles traversent complètement la couche adhésive 410) et peuvent éventuellement se prolonger dans la couche de protection externe 430 de manière à y former des trous borgnes (figure 5B).

Selon une autre alternative, les ouvertures 800 peuvent être réalisées une fois que les différentes structures élémentaires ont été empilées.

Ces ouvertures 800 sont, par exemple, de forme cylindrique avec un diamètre de 50µm. Elles peuvent être réalisées par une gravure laser débouchant directement sur les contacts électriques cathodique 301 et anodique 302. Plus particulièrement, la gamme de longueurs d'onde de lasers disponibles de l'infrarouge (lasers CO₂, Nd:YAG, etc.) à la lumière ultraviolette (laser Excimer et des harmoniques de Nd: YAG) offre la possibilité de créer des évidements dans des films polymères. A titre d'exemple, un laser CO₂ (10,4 µm en longueur d'onde) possédant une fréquence de 1ms, une puissance de 3 Watts et une vitesse de déplacement de 10mm/s permet aisément de creuser des formes rectangulaires (0,5mmx0,5mm) avec une profondeur de 0,02 mm tout en s'arrêtant proprement sur les couches métalliques.

### Etape 3 : Amincissement du substrat des microbatteries :

C'est l'étape de rectification chimique de la face externe du substrat 200 rigide en verre. Cette étape permet de réduire l'épaisseur du substrat 200, par exemple, de 500µm à 50µm, tout en contrôlant la rugosité avec un TTV (pour « Total Thickness Variation ») ayant une valeur équivalente à celle du substrat avant amincissement (environ 1µm). L'épaisseur en face arrière 202 est réduite tout en préservant l'intégrité des microbatteries 300 se trouvant sur la face avant 201. Le volume alloué aux couches de packaging par rapport au volume de couches actives est ainsi réduit.

Pour réaliser cette étape, la structure élémentaire est positionnée à l'intérieur d'une structure (ou support) de manipulation pour l'amincissement.

### Structure de manipulation 100 :

Comme représenté sur la figure 6, la structure de manipulation 100 comprend un film adhésif 110, destiné à fixer mécaniquement le substrat 200, solidaire d'un cadre de support 120 qui permet la manipulation de la structure 100.

La structure de manipulation 100 est chimiquement inerte vis-à-vis de la solution de gravure utilisée lors de l'étape d). Elle est, avantageusement, en un ou plusieurs matériaux polymères.

Le film adhésif 110 comporte une première face principale 111, adhésive, une seconde face principale 112, pouvant être adhésive ou non adhésive, opposée à la première face principale 111, et une face latérale allant de la première face principale 111 à la seconde face principale 112.

Le film adhésif 110 a une surface supérieure à celle du substrat 200, de manière à pouvoir positionner aisément le substrat 200 sur le film adhésif 110.

Le film adhésif 110 sera choisi de manière à être résistant aux solutions de gravure utilisées. Par exemple, il sera résistant aux solutions acides, dans le cas de substrat en verre.

Le film adhésif 110 est, de préférence, en un matériau polymère.

Le film adhésif 110 est, de préférence, choisi par exemple dans la famille des films activable par insolation UV, par pression ou par chauffage thermique. Un film activable thermiquement permet de mettre en œuvre le procédé avec des dispositifs microélectroniques sensibles aux UV. L'étape d'activation du film adhésif permet une libération aisée des dispositifs microélectroniques lors des procédés de « back-end ».

Le film adhésif 110 est, de préférence, à base d'acrylique et/ou de polyester.

A titre illustratif, nous pouvons citer, les films adhésifs 110 commercialisés par la société 3M sous les références « 3M™9085UV », les films « SP sériés » ou « CP sériés » commercialisés par la société Furukawa Electric group ou encore les films « thermal release » commercialisés par la société Nitto.

Le film adhésif 110 a une épaisseur allant de 100µm à 1mm, par exemple de l'ordre de 150µm.

Avantageusement, l'adhésif 110 présente une très forte force de collage (supérieure à 1N/20mm). Une simple pression suffit à coller le substrat 200 sur le film adhésif 110. L'exposition du film adhésif 110 à une insolation UV et/ou thermique suffit à diminuer cette force de collage (à des forces d'adhésion inférieures à 1N/20mm).

Le cadre de support 120 de la structure de manipulation 100 est rigide, c'est-à-dire qu'il est autoporté et qu'il supporte également le poids, à la fois, du film adhésif 111 et du substrat 200 à amincir. Il peut être facilement manipulé.

Il est fabriqué à partir d'un matériau inerte par rapport aux produits chimiques utilisés dans les solutions de gravure lors de l'amincissement du substrat 200. De préférence, il est en un matériau polymère.

Il peut être en un matériau choisi parmi les polymères à base d'acrylate, de polychlorure, de polycarbonate, de polyéthylène, de mercapto ester, certains époxydes, un de leurs dérivés ou un de leur copolymère.

Le cadre 120 peut être de différentes formes (carré, circulaire, rectangulaire, etc).

De préférence, il est circulaire.

Selon un premier mode de réalisation, le cadre 120 est évidé et sa forme correspond, avantageusement, à celle du pourtour du film adhésif 110). Il est positionné sur la première face 111 du film adhésif 110. Il est directement en contact avec la première face 111, c'est-à-dire qu'ils sont adjacents. Les parois internes du cadre 120 évidé et de la première face 111 du film adhésif 110 délimitent une cavité. Le rayon externe R du cadre 120 sera choisi par l'homme du métier en fonction de la taille du substrat 200. Le rayon R va, par exemple, de 100mm à 350mm. La couronne a une épaisseur A allant, par exemple, de 1 mm à 5mm.

Selon un deuxième mode de réalisation, le cadre 120, évidé ou non évidé, est positionné sur la seconde face 112 du film adhésif. Il est directement en contact avec la seconde face 112, c'est-à-dire qu'ils sont adjacents. Dans ce mode de réalisation, la solution est moins sensible aux éventuelles vibrations de la structure, dues aux bains de gravure chimique et aux procédés de rinçage.

La seconde face 112 du film adhésif peut être adhésive, de manière à permettre le collage du cadre 120 directement sur le film adhésif 110. Autrement, un film supplémentaire adhésif peut être utilisé pour associer par collage le film adhésif 110 avec le cadre rigide 120.

Optionnellement, des éléments de renfort de fixation (comme les colles par exemple) peuvent être ajoutés sur le film adhésif 110 et/ou sur le cadre 120 pour une meilleure fixation.

L'évidement optionnel de ce cadre peut être réalisé par des techniques chimiques ou des techniques d'ablation laser.

L'utilisation d'un cadre 120 évidé permet d'utiliser plusieurs catégories de films adhésifs 110.

Généralement, un cadre 120 plein autorise l'utilisation d'adhésifs thermiques.

D'une manière générale, les dimensions (diamètre interne, diamètre externe, épaisseur) et la forme (circulaire, carré, rectangulaire ou autre) du cadre 120, évidé ou non évidé, peuvent être adaptées au regard des substrats 200 rigides employés et des équipements utilisés pour les procédés de gravure chimique et pour les étapes de « back-end ».

La fixation de la structure élémentaire au film adhésif 410 consiste à mettre en contact direct la couche de protection externe 430 de la structure élémentaire avec la partie adhésive du film 111 du support d'amincissement (figure 6). Dans un mode de réalisation préférentiel, le contact entre la partie adhésive 111 et le film de protection externe 430 couvrant le substrat 200 et la microbatterie 300 se fait sur toute la surface. De manière alternative, ce contact peut être partiel, par exemple, au niveau de quelques zones spécifiques comme la périphérie du substrat 200.

L'opération d'amincissement de la face arrière 202 du substrat 200 en verre consiste à immerger le substrat 200 adhérant à la structure d'amincissement dans un bain chimique. On choisira, avantageusement, un bain de nature acide (pH<7), par exemple un mélange comprenant 10% d'HCl et 37% d'HF et chauffé à 25°C. Avec de telles conditions, pour amincir le substrat en verre de 150µm (i.e. pour passer d'une épaisseur initiale de 500µm à une épaisseur finale de 50µm), la gravure acide va durer environ 90 min. Puis, l'ensemble est rincé à l'eau déminéralisée et séché sous air.

La présence de la couche adhésive 410, et du film de protection 430, permet de renforcer et d'allonger les chemins de diffusion des produits de gravure, comme le HF. Le film de protection 430 joue le rôle de film sacrificiel lors des opérations d'amincissement chimique. Il facilite la manipulation de l'ensemble avant et/ou après amincissement.

Après l'étape d'amincissement de la face arrière 202 du substrat 200, le substrat ultrafin 200 contenant les microbatteries est libéré du support d'amincissement. Cette étape peut être mise en œuvre en réalisant un ou plusieurs passages d'un faisceau un laser. Le laser peut être un laser picoseconde dans le visible (530 nm), un laser CO₂, un laser YAG, un laser femtoseconde ou encore un laser excimer. Selon une autre variante de réalisation, l'étape de séparation peut être réalisée par une technique de découpe mécanique à scie (« sawing »). On pourra, éventuellement, réaliser cette étape en exposant la face amincie du verre à un flux UV pour dissocier le composant microbatterie 300 du support d'amincissement 100.

La libération des structures amincies se fait, avantageusement, par un procédé de découpe mécanique tout en gardant le ruban adhésif 110 du support d'amincissement 100 accroché à la couche de protection externe 430. Le ruban adhésif 110 du support d'amincissement 100 est ensuite éliminé par un procédé dit de « peeling » mécanique de la couche de protection externe lors du procédé d'assemblage.

Alternativement, la structure élémentaire peut être libérée de la structure de manipulation 100 en détachant la couche de protection externe 430 de la couche adhésive 410.

A l'issue de cette étape, le substrat 200 est libéré (figure 7).

L'utilisation d'une couche adhésive 410 recouvert par une couche de protection externe 430 protège les dispositifs microélectroniques 300 lors de l'étape de gravure et facilite la libération des composants après l'amincissement.

### Etape 4 : Assemblage vertical des microbatteries :

Cette étape consiste à assembler verticalement des microbatteries 300 en reportant, de façon imbriquée, plusieurs structures élémentaires. L'assemblage peut comporter deux structures élémentaires ou plus de deux structures élémentaires, par exemple, trois, quatre, cinq, six ou sept structures élémentaires.

L'assemblage est réalisé à partir d'une première structure élémentaire. Le film de protection externe 430 de la couche adhésive 410 est retiré par une opération mécanique (« peeling »).

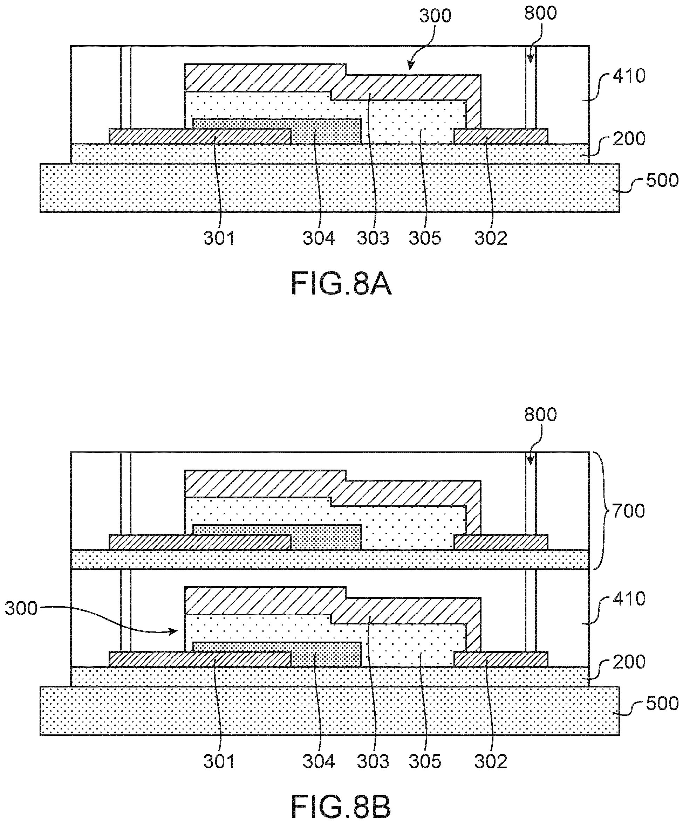

Pour faciliter cette opération, il est possible de maintenir la structure élémentaire avec un système de vide permettant de maintenir la face amincie 202 du substrat 200 sur un support 500, par exemple sur un support d'un outil de laminage équipé d'un système de vide (figure 8A).

Le report de la deuxième structure élémentaire sur la première structure élémentaire peut être mis en œuvre par une étape de laminage, éventuellement sous vide et/ou en chauffant, par exemple à une température allant de 40°C à 150°C, avantageusement à 120°C. Le film de protection est ensuite retiré (figure 8B).

Les propriétés de collage de la couche adhésive 410 sont exploitées pour solidariser mécaniquement les structures unitaires et les empiler de façon parallèle les unes sur les autres. En effet, la deuxième face de la couche adhésive 410 est judicieusement positionnée pour recevoir la face arrière du substrat 200 aminci d'une autre structure.

La superposition verticale des structures élémentaires est obtenue par solidarisation et contact direct entre la couche adhésive d'une structure élémentaire et la structure élémentaire supérieure, positionnée directement au-dessus. Autrement dit, la deuxième face du substrat d'une structure élémentaire ou la couche adhésive d'une structure élémentaire est fixée directement à la couche adhésive de la structure élémentaire sous-jacente.

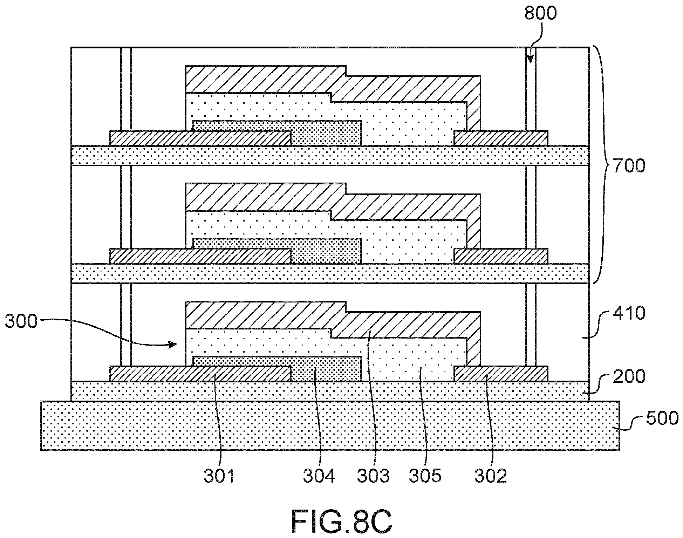

L'opération peut être itérée une troisième fois pour fixer une troisième structure élémentaire (Figure 8C).

On reproduira autant de fois que nécessaire ces étapes, jusqu'à obtenir le nombre désiré de microbatteries empilées.

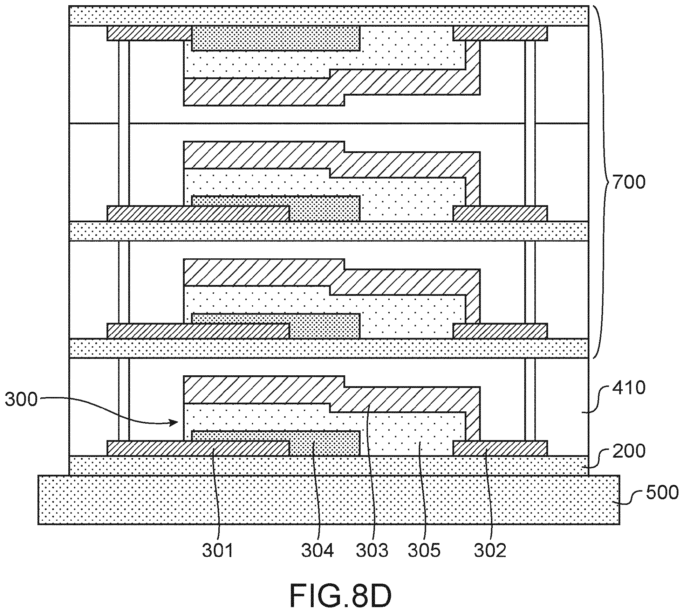

Dans un mode de réalisation préférentiel, la dernière structure élémentaire de l'empilement est en position tête bêche par rapport aux autres structures élémentaires de l'empilement vertical (figure 8D). Avantageusement, ce mode de réalisation conduit à une encapsulation accrue des microbatteries.

Les microbatteries sont connectées en parallèle sur la figure 8D.

Selon une variante de réalisation, non représentée, les microbatteries sont connectées électriquement en série. Pour cela, les contacts électriques de polarités différentes sont alignés dans le plan de l'empilement. Une mise en série couplée avec une mise en parallèle pourrait également être réalisée.

Avantageusement, les ouvertures 800, débouchant sur les collecteurs de courant 301 et 302, sont utilisées, non seulement, pour aligner les structures élémentaires entre elles, mais aussi, pour limiter la formation des bulles lors du procédé de laminage.

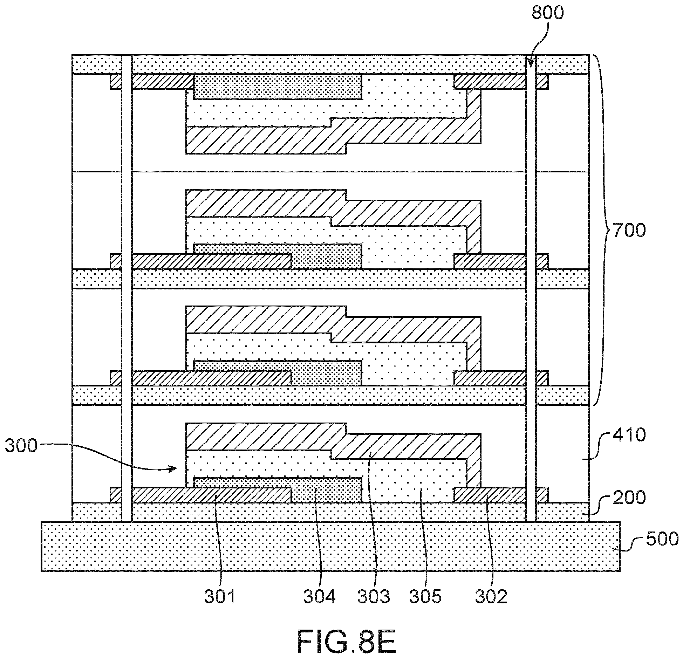

Un procédé laser peut être utilisé pour ouvrir les substrats amincis 200 des quatre structures unitaires au niveau des passages 800 (figure 8E).

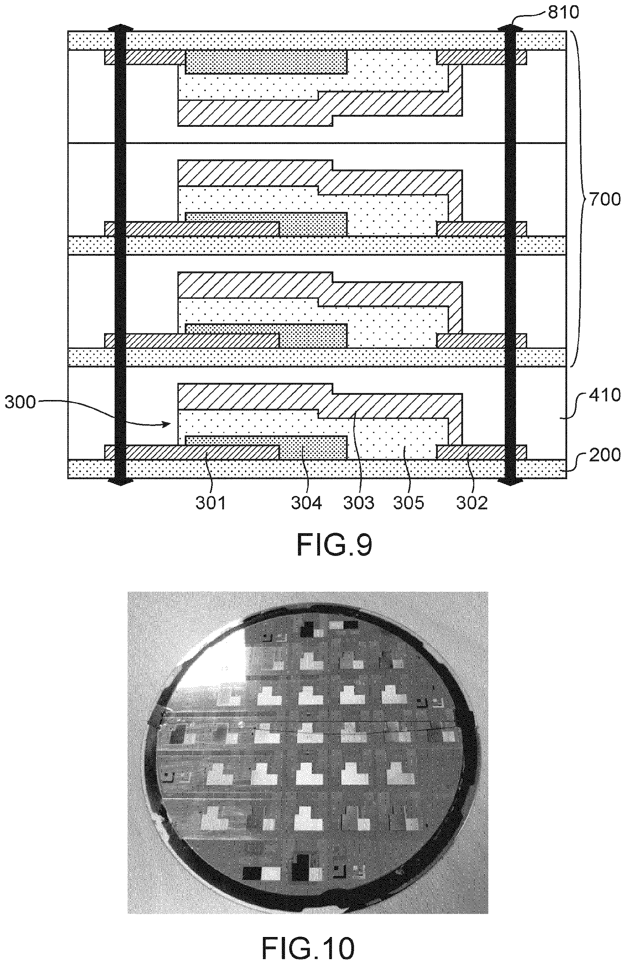

Lors d'une étape ultérieure, des plots électriquement conducteurs 810 sont formés, par exemple en remplissant les passages 800 avec un élément électriquement conducteur, ce qui permet de relier électriquement les collecteurs de courant anodique 302 d'un côté et les collecteurs de courant cathodique 301 de l'autre selon une configuration de mise en parallèle des quatre batteries unitaires (figure 9).

Un traitement thermique est, avantageusement, réalisé pour obtenir des plots ayant une bonne conduction électrique.

### Exemples illustratifs et non limitatifs d'un mode de réalisation :

Dans cet exemple, le substrat hôte 200 a une épaisseur de 500µm est un verre AF32 de la famille des alkali-free borosilicates, commercialisé par la société SCHOTT.

Les composants microélectroniques 300 sont des microbatteries. L'électrode positive est une couche LiCoO₂ d'une épaisseur de 20µm recuite à 600°C pendant 10h pour une bonne cristallisation du matériau LiCoO₂. L'électrolyte 305 est du LiPON de 3µm d'épaisseur. L'électrode négative 303 est une couche de silicium de 50nm.

La couche adhésive 410 est un film commercialisé par Tesa sous la référence Tesa®61500. La couche de protection 430 est à base de PET. La couche adhésive 410 et sa couche de protection externe 430 sont laminées sur le substrat 200. L'assemblage est réalisé sous vide à une température de 90°C avec une pression supérieure à 1 bar et une vitesse inférieure à 3 m/min. L'ensemble obtenu est représenté sur la figure 10.

Le support d'amincissement 100 comprend un cadre évidé 120 en PMMA forme circulaire avec un diamètre externe de 220mm et une épaisseur de 4 mm, et positionné sur un ruban étirable 100 dont la face interne est de nature adhésive, et ayant une épaisseur d'environ 110µm.

L'étape d'amincissement est réalisée dans un bain acide (pH<7), comprenant 10% d'HCl et 37% d'HF et chauffé à 25°C, pendant environ 90 min. Puis, l'ensemble est rincé à l'eau déminéralisée et séché sous air.

Le substrat ultrafin 200 contenant les microbatteries 300 est libéré du support d'amincissement en réalisant 10 passages d'un laser picoseconde dans le visible (530 nm) à une énergie de 50 µJ et une vitesse de 20mm/s.

La face arrière amincie de la première structure élémentaire est fixée sur un support 500 d'un outil de laminage équipé d'un système de vide. Le film de protection 430 est ensuite retiré.

Le report de la deuxième structure élémentaire sur la première structure élémentaire est obtenu par une étape de laminage, sous vide et en chauffant à une température de 90°C avec une pression supérieure à 1 bar et une vitesse inférieure à 3 m/min. Le film de protection externe 430 est ensuite retiré.

Avant de procéder à l'étape d'interconnexion électrique des quatre microbatteries unitaires, un procédé laser est utilisé pour ouvrir les substrats amincis 200 des quatre structures unitaires au niveau des passages 800. Les paramètres sont : laser picoseconde dans le visible à 530 nm, environ 50 passages à une énergie de 50 µJ et une vitesse de 20mm/s.

Les interconnexions électriques sont réalisées en remplissant les ouvertures 800 par un polymère liquide conducteur, commercialisés par la société Epo-Tek sous la référence E4110, puis en faisant un traitement thermique adéquat. Des plots de conduction électrique 810 sont obtenus après un traitement thermique à 150°C pendant une durée de 15 minutes.

## Revendications

1. Procédé d'amincissement et d'encapsulation d'un composant microélectronique, le procédé comprenant les étapes suivantes :
- fourniture d'un substrat (200) comprenant une première face principale (201), une deuxième face principale (202) et une face latérale, le substrat ayant une épaisseur supérieure à 200µm, et étant recouvert par un composant microélectronique (300) et une couche adhésive (410), la couche adhésive (410) étant recouverte par une couche de protection détachable (430); le substrat (200), la couche adhésive (410) et le composant (300) formant une structure élémentaire,
- fixation de la couche de protection détachable (430) sur une structure de manipulation (100) comprenant un film adhésif (110) et un cadre de support (120), le film adhésif (110) comprenant une première face adhésive (111) et une seconde face (112), opposée à la première face adhésive (111), la couche de protection détachable (430) étant disposée en regard de la première face adhésive (111) du film adhésif (110),
- dépôt d'une couche de protection latérale (600) sur la face latérale du substrat (200) et sur le pourtour de la seconde face (202) du substrat (200), la couche de protection latérale (600) étant en contact avec la première face adhésive (111) du film adhésif (110), moyennant quoi le substrat (200) est assemblé avec la structure de manipulation (100),
- amincissement de la seconde face principale (202) du substrat jusqu'à une épaisseur inférieure à 100µm, et de préférence inférieure à 50µm,
- séparation de la structure élémentaire de la structure de manipulation (100).

2. Procédé selon la revendication 1, **caractérisé en ce qu'**il comprend en outre les étapes suivantes :
- séparation de la couche de protection détachable (430) de la couche adhésive (410),
- fixation d'un élément (700) sur la couche adhésive (410) de la structure élémentaire.

3. Procédé selon la revendication 2, **caractérisé en ce que** l'élément (700) fixé sur la couche adhésive (410) est un capot.

4. Procédé selon la revendication 2, **caractérisé en ce que** l'élément (700) fixé sur la couche adhésive (410) comprend une ou plusieurs autres structures élémentaires, de manière à former un empilement vertical, avec la première structure élémentaire, chaque structure élémentaire étant fixée à la couche adhésive (410) de la structure élémentaire sous-jacente.

5. Procédé selon la revendication précédente, **caractérisé en ce qu'**une ultime structure élémentaire est positionnée sur l'empilement vertical, la couche adhésive (410) de l'ultime structure élémentaire étant fixée à la couche adhésive (410) de la structure élémentaire sous-jacente.

6. Procédé selon l'une des revendications 1 à 5, **caractérisé en ce que** le procédé comporte en outre une étape au cours de laquelle des ouvertures (800) sont réalisées à travers la couche adhésive (410) de manière à rendre accessible le composant microélectronique (300), et une étape au cours de laquelle les ouvertures (800) sont remplies par un matériau électriquement conducteur moyennant quoi on forme des contacts électriquement conducteurs (810).

7. Procédé selon l'une des revendications 1 à 5, **caractérisé en ce que** la couche adhésive (410) est un film conducteur anisotrope.

8. Procédé selon l'une quelconque des revendications 1 à 7, **caractérisé en ce que** la couche adhésive (410) présente un évidement ou **en ce que** la couche adhésive (410) est discontinue de manière à former une cavité (450) pour le composant microélectronique (300).

9. Procédé selon l'une quelconque des revendications 1 à 8, **caractérisé en ce que** la couche adhésive (410) a une épaisseur allant de 1 à 50µm.

10. Procédé selon l'une quelconque des revendications précédentes, **caractérisé en ce que** la couche adhésive (410) est laminée sur le substrat (200).

11. Procédé selon l'une quelconque des revendications précédentes, **caractérisé en ce que** le substrat (200) comporte plusieurs composants microélectroniques (300), de préférence, des microbatteries.

12. Dispositif comprenant un empilement vertical comprenant une première structure élémentaire et une deuxième structure élémentaire, chaque structure élémentaire comprenant un substrat (200), ayant une épaisseur inférieure à 100µm et de préférence inférieure à 50µm, une première face principale (201) du substrat étant recouverte successivement par un composant microélectronique (300) et par une couche adhésive (410), la deuxième structure élémentaire étant fixée à la couche adhésive (410) de la première d'une structure élémentaire, la couche adhésive (410) étant un film conducteur anisotrope.

13. Dispositif selon la revendication 12, **caractérisé en ce que** l'empilement vertical comprend une structure élémentaire additionnelle, la couche adhésive (410) de la structure élémentaire additionnelle étant positionnée en regard de et fixée à la couche adhésive (410) de la structure élémentaire sous-jacente.
